(19) Europäisches Patentamt
European Patent Office
Office européen des brevets

(11) Publication number: **0 016 614**
**B1**

(12) **EUROPEAN PATENT SPECIFICATION**

(45) Date of publication of patent specification: 01.06.83

(51) Int. Cl.³: B 32 B 27/08, B 32 B 27/30

(21) Application number: 80300774.9

(22) Date of filing: 13.03.80

# (54) Laminated structure comprising a nitrile resin barrier layer, a tie layer and a polyolefin layer, and coextrusion process for making said structure.

(30) Priority: 15.03.79 US 20569

(43) Date of publication of application:
01.10.80 Bulletin 80/20

(45) Publication of the grant of the patent:
01.06.83 Bulletin 83/22

(84) Designated Contracting States:
BE CH DE FR GB IT NL SE

(56) References cited:
GB - A - 1 427 959
GB - A - 1 466 630
US - A - 4 015 033
US - A - 4 109 037
US - A - 4 123 576

(73) Proprietor: THE STANDARD OIL COMPANY
Midland Building
Cleveland, Ohio 44115 (US)

(72) Inventor: Wiggins, Wayne Thomas
9909 Regatta Trail
Aurora, Ohio 44202 Portage (US)
Inventor: Gerry, Frank Scott
2449 E. Streetsboro Road
Hudson, Ohio 44236 Summit (US)

(74) Representative: Smith, Sydney et al,
Elkington and Fife High Holborn House 52/54
High Holborn
London WC1V 6SH (GB)

EP 0 016 614 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Laminated structure comprising a nitrile resin barrier layer, a tie layer and a polyolefin layer, and coextrusion process for making said structure

This invention relates to a laminated structure in which a tie layer of a particular composition is used to adhere together a co-extruded polyolefin and nitrile barrier resin.

Composite structures composed of at least one layer of a polyolefin and at least one layer of a nitrile barrier resin have been prepared and are found to be useful for many purposes, primarily for packaging. Packages of such composites have excellent gas barrier properties, they are particularly good barriers to oxygen, carbon dioxide and water vapour, and they can be fabricated by heat sealing because of the excellent heat-sealing properties of polyolefins. The manufacture of such composites is not easy because of the lack of adhesion between the surfaces of the polyolefin and the nitrile barrier resin. This lack of adhesion has in the past been improved by the use of an adhesive or a corona-discharge treatment of the polyolefin surface. Other methods include the use of a tie layer composed of a blend of the polyolefin and the nitrile-containing polymer as described in US—A—4,123,576.

In GB—A—1,427,959 there is disclosed a process for the manufacture of laminates, in particular bonded laminates of an olefin polymer such as polyethylene or polypropylene with a styrene polymer such as polystyrene, impact-resistant polystyrene or an ABS polymer, wherein the waste material produced in the further processing of the laminate is added to the adhesion promoting primer layer or to an outer layer when manufacturing the laminates.

It is an object of the present invention to provide improved composite structure of polyolefins and nitrile barrier resins, by employing a particular polymeric mixture as a tie layer for adhering the polymer surfaces together.

According to the invention the tie layer contains as an essential component a material which is not to be found in the outer layers namely a halogenated polyolefin.

This invention therefore provides a laminated structure comprising a first outer layer composed of a nitrile barrier resin (I), a second outer layer composed of a polyolefin resin (II), and an intermediate tie layer between the two outer layers comprising a mixture of a nitrile barrier resin (I), a polyolefin resin (II) and a third polymer resin (III), characterised in that the third polymer resin (III) is a halogenated polyolefin.

The proportions of the materials in the tie layer and the temperature at which the mixture is extruded affect both adhesion and viscosity control in the co-extrusion process.

A significant advantage of the present invention is the fact that scrap material can be reground and used in the tie layer with some adjustment of the three essential components mentioned above.

The polyolefins useful in the present invention include polyethylene, polypropylene, polybutylene, and interpolymers of two or more of ethylene, propylene, and the butylenes. Polyethylene includes both high- and low-density polymer. The most preferred polyolefins are polyethylene and polypropylene.

The halogenated polyolefins useful in this invention include halogenated polyethylene, halogenated polypropylene, halogenated polybutylene, and halogenated olefin copolymers. Preferred are chlorinated and brominated polyolefins and most preferred are chlorinated polyethylenes and chlorinated polypropylenes.

The nitrile barrier resins useful in the present invention include those prepared by the polymerization of (A) from 60 to 90% by weight based on the combined weight of (A) and (B) of at least one nitrile having the structure

$CH_2{=}C{-}CN$
|
R

in which R represents hydrogen, a lower alkyl group having from 1 to 4 carbon atoms, or a halogen, (B) from 10 to 40% by weight based on the combined weight of (A) and (B) of one or more of the following:— (1) an ester having the structure

$CH_2{=}C{-}COOR_2$
|
$R_1$

in which $R_1$ represents hydrogen, an alkyl group having from 1 to 4 carbon atoms, or a halogen, and $R_2$ represents an alkyl group having from 1 to 6 carbon atoms; (2) an alpha-olefin having the structure

R′
|
$CH_2{=}C$
|
R″

in which R′ and R″ which may be the same or different represent alkyl groups having from 1 to 7 carbon atoms; (3) methyl vinyl ether, ethyl vinyl ether, a propyl vinyl ether, or a butyl vinyl ether; (4) vinyl acetate; (5) styrene and (6) indene; in the presence of from 0 to 40 parts by weight based on the combined weight of (A) and (B) of (C) a rubbery polymer of a conjugated diene monomer which is butadiene or isoprene and optionally a comonomer which is styrene, a nitrile monomer having the structure

$CH_2{=}C{-}CN$
|
R

in which R is as defined above, and an ester having the structure

$$\begin{array}{l} CH_2{=}C{-}COOR_2 \\ \qquad\;| \\ \qquad\;R_1 \end{array}$$

in which $R_1$ and $R_2$ are as defined above, the rubbery polymer containing from 50 to 100% by weight of polymerized conjugated diene and from 0 to 50% by weight of comonomer.

This invention is particularly applicable to the co-extrusion process. Two dissimilar thermoplastic polymer materials, i.e. a polyolefin and a nitrile barrier resin, are adhered together in the molten phase while being shaped by passage through a die. The tie layer is also in the molten state in the co-extrusion process and is also shaped by means of passing it through a die. In the co-extrusion process, the components of the tie layer are weighed, powder blended and fed into an extruder hopper and continuously passed from the hopper to the extruder where they are mixed, heated to a melt, and extruded between two outside layers of extruded polyolefin and nitrile barrier resin. The three shaped melt streams of polymer are combined using a co-extrusion adapter and die in a one-step in-line manufacturing operation. This permits the component layers to flow together to form the desired multilayer structure.

The tie layer can be extruded within a temperature range of 150 to 235°C. The tie layer melt should preferably be extruded at a temperature of from 200 to 210°C for best results.

The proportions of the three essential components in the tie layer can be varied widely from nearly all halogenated polyolefin to nearly all polyolefin with minor amounts of the nitrile barrier resin. A weight ratio of from 2:1:1 to 5:1:1 of halogenated polyolefin:nitrile barrier resin:polyolefin is preferred. A particularly good tie layer was obtained with a 4:1:1 weight ratio mixture, with 1 part of polyurethane included. This mixture, when used to tie a nitrile barrier resin to polyethylene, had a peel strength of 980 g per linear centimetre (5.5 pounds per linear inch) and excellent viscosity control. The halogenated polyolefin was a suspension polymerized high density polyethylene resin which was chlorinated to an extent of 36% by weight. The polyethylene and polyurethane were standard low density polyethylene and extrudable polyurethane.

In making the composite co-extruded structures of this invention, the pressure in the die may reach as high as 350 kg per sq. cm. (345.5 bar; 5000 psi). A normal pressure is about 175 kg per sq. cm. (172.7 bar; 2500 psi).

The halogenated polyolefins useful in this invention may contain cross-linking agents such as a peroxide.

The invention is further illustrated in the following examples wherein the amounts of ingredients are expressed in parts by weight unless otherwise indicated. In the examples, the composite sheets were prepared using a co-extrusion adapter which was of conventional feed block design. Three extruders fed this multiple inlet heated block. The three, still separate, melt streams were aligned in the direction of the outlet and fed into a converging plate which directs the flow into the single manifold and die. At the point of entry into the die, the melts flow into contact and distribute to the contour of the die.

Example 1

A mixture of a high nitrile barrier resin (I) prepared by copolymerization of 75 parts by weight of acrylonitrile and 25 parts by weight of methyl acrylate in the presence of 10 parts by weight of a rubbery copolymer of butadiene and acrylonitrile according to US—A—3,426,102, (II) a low density polyethylene having a melt index of 0.25 and density of 0.919, and (III) a chlorinated low density polyethylene having 36% chlorine by weight and a viscosity of 17 centipoises (0.017 $m^{-1}$ $kgs^{-1}$) in which the weight ratio of 1:1:4 was prepared by powder blending the three components by adding each component to a can and mixing with a steel rod. The mixture was placed in a Brabender extrusion apparatus and was melt extruded into a co-extrusion adapter at 200°C. At the same time, some resin (I) and some resin (II) were also independently and simultaneously extruded in a co-extrusion adapter. The three co-extruded materials were passed through a 6-inch (15.24 cm) sheet die at 205°C where the melts were allowed to flow freely in a laminar form and the mixture of resins served as a tie layer between sheets of resin (1) and (2). The resulting laminated sheet was found to be very uniform with about *27-mil* (0.686 mm) thickness. The peel strength as measured by an Instron ASTM #1876 (1971 Part 6) apparatus using a 180° peel on a 2.54 cm (1 inch) wide sample approximately 15 cm (6 inches) long. The peel strength as determined at both 5 cm- and 25 cm-per-minute rates from edge to edge of the laminate was found to be 446 g per linear centimetre (2.5 pounds per linear inch).

Example 2

Example 1 was repeated with the variation that there was included in the tie layer mixture a polyurethane (Q-thane, Registered Trade Mark marketed by K. J. Quinn) and the weight ratio of halogenated polyethylene:nitrile barrier resin:polyolefin:polyurethane was 4:1:1:1. A composite sheet which had a peel strength of 996 g per linear centimetre (5.58 pounds per linear inch) was produced.

Example 3

Example 1 was repeated using only resins (I) and (II) with no tie layer to produce a product outside the scope of this invention which

showed no measurable peel strength between the co-extruded layers of resins (I) and (II).

### Example 4

Example 1 was repeated except that only resin (III) (chlorinated polyethylene) was used as the tie layer to produce a co-extruded composite outside the scope of the present invention having a peel strength of only 267 g per linear centimetre (1.50 pounds per linear inch).

### Example 5

Example 1 was repeated except that resin (III) was excluded from the tie layer to produce a composite sheet which was outside the scope of this invention having a peel strength of only about 90 g per linear centimetre (0.5 pounds per linear inch).

## Claims

1. A laminated structure comprising a first outer layer composed of a nitrile barrier resin (I), a second outer layer composed of a polyolefin resin (II), and an intermediate tie layer between the two outer layers containing a mixture of a nitrile barrier resin (I), a polyolefin resin (II) and a third polymer resin (III), characterised in that the third polymer resin (III) is a halogenated polyolefin.

2. A structure as claimed in claim 1 characterised in that the nitrile barrier resin (I) is one prepared by the polymerization of

(A) from 60 to 90% by weight based on the combined weight of (A) and (B) of at least one nitrile having the structure

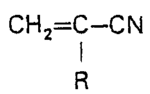

in which R represents hydrogen, a lower alkyl group having from 1 to 4 carbon atoms, or a halogen,

(B) from 10 to 40% by weight based on the combined weight of (A) and (B) of one or more of the following:—

(1) an ester having the structure

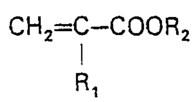

in which $R_1$ represents hydrogen, and alkyl group having from 1 to 4 carbon atoms, or a halogen, and $R_2$ represents an alkyl group having from 1 to 6 carbon atoms;

(2) an alpha-olefin having the structure

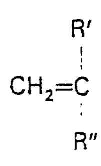

in which R′ and R″ which may be the same or different represent alkyl groups having from 1 to 7 carbon atoms;

(3) methyl vinyl ether, ethyl vinyl ether, a propyl vinyl ether or a butyl vinyl ether,

(4) vinyl acetate,

(5) styrene, and

(6) indene,

in the presence of from 0 to 40 parts by weight based on the combined weight of (A) and (B) of

(C) a rubbery polymer of a conjugated diene monomer which is butadiene or isoprene and optionally a comonomer which is styrene, a nitril monomer having the structure

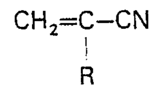

in which R is as defined above, and an ester having the structure

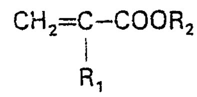

in which $R_1$ and $R_2$ are as defined above, the rubbery polymer containing from 50 to 100% by weight of polymerized conjugated diene and from 0 to 50% by weight of comonomer.

3. A structure as claimed in claim 1 or claim 2 characterised in that the polyolefin is polyethylene, polypropylene, polybutylene, and/or an interpolymer of two or more of ethylene, propylene, and the butylenes.

4. A structure as claimed in any of claims 1 to 3 characterised in that the halogenated polyolefin is halogenated polyethylene, halogenated polypropylene, and/or halogenated polybutylene.

5. A structure as claimed in any of claims 1 to 4 characterised in that (A) is acrylonitrile, (B) is methyl acrylate, and (C) is a butadiene-acrylonitrile rubbery polymer.

6. A structure as claimed in claim 5 characterised in that the tie layer also comprises a polyurethane.

7. A structure as claimed in claim 6 characterised in that the tie layer comprises halogenated polyolefin; nitrile barrier resin; polyolefin and polyurethane in a weight ratio of 4:1:1:1.

8. A co-extrusion process for the production of a laminated structure as claimed in claim 1 characterised in that the layers are adhered together in the molten phase at a temperature in the range of 150 to 235°C and passed through a shaping die to form a laminate.

## Revendications

1. Structure stratifiée comprenant une première couche extérieure composée d'une résine impreméable à base de nitrile (I), une second couche extérieure composée d'une résine polyoléfine (II), et une couche de liaison

intermédiaire entre les deux couches extérieures contenant un mélange d'une résine imperméable à base de nitrile (I), d'une résine polyoléfine (II) et d'une troisième résine polymère (III), caractérisée par le fait que la troisième résine polymère (III) est une polyoléfine halogénée.

2. Structure selon la revendication 1, caractérisée par le fait que la résine imperméable à base de nitrile (I) est une résine préparée par la polymérisation de

(A) de 60 à 90 % en poids, par rapport au poids combiné de (A) et de (B), d'au moins un nitrile ayant la structure:

$$CH_2{=}\underset{\displaystyle R}{\underset{|}{C}}{-}CN,$$

dans laquelle R représente de l'hydrogène, un groupe alkyle inférieur ayant de 1 à 4 atomes de carbone, ou un halogène,

(B) de 10 à 40 % en poids, par rapport au poids combiné de (A) et de (B), d'un ou plusieurs des constituants suivants:

(1) un ester avant la structure:

$$CH_2{=}\underset{\displaystyle R_1}{\underset{|}{C}}{-}COOR_2,$$

dans laquelle $R_1$ représente de l'hydrogène, un groupe alkyle ayant de 1 à 4 atomes de carbone, ou un halogène, et $R_2$ représente un groupe alkyle ayant de 1 à 6 atomes de carbone;

(2) une alpha-oléfine ayant la structure:

$$CH_2{=}\overset{\displaystyle R'}{\overset{|}{\underset{\displaystyle R''}{\underset{|}{C}}}}$$

dans laquelle R′ et R″, qui peuvent être identiques ou différents, représentent des groupes alkyle ayant de 1 à 7 atomes de carbone;

(3) le méthylvinyléther, l'éthylvinyléther, un propylvinyléther ou un butylvinyléther,

(4) l'acétate de vinyle,

(5) le styrène et

(6) l'indène,

en présence de 0 à 40 parties en poids, par rapport au poids combiné de (A) et de (B), de

(C) un copolymère caoutchouteux d'un monomère diène conjugué qui est du butadiène ou de l'isoprène et éventuellement d'un comonomère qui est du styrène, un monomère nitrile ayant la structure

$$CH_2{=}\underset{\displaystyle R}{\underset{|}{C}}{-}CN,$$

dans laquelle R est tel que défini ci-dessus, et d'un ester ayant la structure

$$CH_2{=}\underset{\displaystyle R_1}{\underset{|}{C}}{-}COOR_2,$$

dans laquelle $R_1$ et $R_2$ sont tels que définis ci-dessus, le polymère caoutchouteux contenant de 50 à 100 % en poids de diène conjugué polymérisé et de 0 à 50 % en poids de comonomère.

3. Structure selon la revendication 1 ou la revendication 2, caractérisée par le fait que la polyoléfine est du polyéthylène, du polypropylène, du polybutylène et/ou un interpolymère de deux monomères ou plus choisis parmi l'éthylène, le propylène et les butylènes.

4. Structure selon l'une des revendications 1 à 3, caractérisée par le fait que la polyoléfine halogénée est du polyéthylène halogéné, du polypropylène halogéné et/ou du polybutylène halogéné.

5. Structure selon l'une des revendications 1 à 4, caractérisée par le fait que (A) est l'acrylonitrile, (B) est de l'acrylate de méthyle et (C) est un polymère caoutchouteux butadiène-acrylonitrile.

6. Structure selon la revendication 5, caractérisée par le fait que la couche de liaison comprend aussi un polyuréthane.

7. Structure selon la revendication 6, caractérisée par le fait que la couche de liaison comprend la polyoléfine halogénée, la résine imperméable à base de nitrile, la polyoléfine et le polyuréthane dans un rapport en poids de 4:1:1:1.

8. Procédé de co-extrusion pour la production d'une structure stratifiée telle que définie à la revendication 1, caractérisée par le fait qu'on fait adhérer les couches ensemble, dans la phase fondue, à une température comprise entre 150 et 235° C, et on les fait passer à travers une filière de formage de façon à former un stratifié.

**Patentansprüche**

1. Ein Laminat, das eine erste, aus einem Nitrilsperrharz (I) aufgebaute äußere Schicht, eine zweite, aus einem Polyolefinharz (II) aufgebaute äußere Schicht und eine Verbindungszwischenschicht zwischen den zwei äußeren Schichten aufweist, die ein Gemisch aus einem Nitrilsperrharz (I), einem Polyolefinharz (II) und einem dritten Polymerharz (III) enthält, dadurch gekennzeichnet, daß das dritte Polymerharz (III) ein halogenhaltiges Polyolefin ist.

2. Ein Laminat gemäß Anspruch 1, dadurch gekennzeichnet, daß das Nitrilsperrharz (I) ein Harz ist, das hergestellt ist durch Polymerisation von

(A) 60 bis 90 Gew.% (auf der Basis der kombinierten Gewichte von (A) und (B))

mindestens eines Nitrils der Formel

$CH_2{=}C{-}CN$
|
R

worin R Wasserstoff, eine Niederalkylgruppe mit 1 bis 4 Kohlenstoffatomen oder ein Halogen ist,

(B) 10 bis 40 Gew.% (auf der Basis der kombinierten Gewichte (A) und (B)) eines oder mehrerer der folgenden Verbindungen:

(1) eines Esters der Formel

$CH_2{=}C{-}COOR_2$
|
$R_1$

worin $R_1$ Wasserstoff, eine Alkylgruppe mit 1 bis 4 Kohlenstoffatomen oder ein Halogen ist und $R_2$ eine Alkylgruppe mit 1 bis 6 Kohlenstoffatomen ist;

(2) ein $\alpha$-Olefin der Formel

R'
|
$CH_2{=}C$
|
R"

worin R und R", die gleich oder verschieden sein können, Alkylgruppen mit 1 bis 7 Kohlenstoffatomen darstellen;

(3) Methylvinylether, Ethylvinylether, ein Propylvinylether oder ein Butylvinylether,

(4) Vinylacetat,

(5) Styrol und

(6) Inden,

in Anwesenheit von 0 bis 40 Gewichtsteilen (auf der Basis der kombinierten Gewichte von (A) und (B)) eines

(C) gummiförmigen Polymerisats aus Butadien oder Isopren als konjugiertes Dien-Monomer und gegebenenfalls einem Comonomeren das Styrol, ein Nitril-Monomer der Formel

$CH_2{=}C{-}CN$
|
R

worin R die vorstehend definierte Bedeutung hat, oder ein Ester der Formel

$CH_2{=}C{-}COOR_2$
|
$R_1$

worin $R_1$ und $R_2$ die vorstehend angegebenen Bedeutungen haben, wobei das gummiförmige Polymerisat 50 bis 100 Gew.% eines polymerisierten konjugierten Diens und 0 bis 50 Gew.% eines Comonomers enthält.

3. Ein Laminat gemäß Anspruch 1 oder 2, dadurch gekennzeichnet, daß das Polyolefin Polyethylen, Polypropylen, Polybutylen und/oder ein Interpolymerisat aus zwei oder mehr der Verbindungen Ethylen, Propylen und den Butylenen ist.

4. Ein Laminat gemäß irgendeinem der Ansprüche 1 bis 3, dadurch gekennzeichnet, daß das halogenhaltige Polyolefin ein halogenhaltiges Polyethylen, ein halogenhaltiges Polypropylen und/oder ein halogenhaltiges Polybutylen ist.

5. Ein Laminat gemäß irgendeinem der Ansprüche 1 bis 4, dadurch gekennzeichnet, daß (A) Acrylnitril, (B) Methylacrylat und (C) ein gummiförmiges Polymerisat aus Butadien und Acrylnitril ist.

6. Ein Laminat gemäß Anspruch 5, dadurch gekennzeichnet, daß die Verbindungsschicht auch ein Polyurethan enthält.

7. Ein Laminat gemäß Anspruch 6, dadurch gekennzeichnet, daß die Verbindungsschicht ein halogeniertes Polyolefin, ein Nitrilsperrharz, ein Polyolefin und ein Polyurethan im Gewichtsverhältnis 4:1:1:1 enthält.

8. Ein Coextrusionspreßverfahren zur Herstellung eines Laminats gemäß Anspruch 1, dadurch gekennzeichnet, daß die Schichten in der geschmolzenen Phase bei einer Temperatur im Bereich von 150 bis 235°C zusammengeklebt werden und durch eine Form zur Bildung eines Laminats gegeben werden.